# FASCICULE DE BREVET EUROPEEN

(11) **EP 3 968 100 B1**
(45) Date de publication et mention de la délivrance du brevet: **07.08.2024**
(21) Numéro de dépôt: 21158373.7
(22) Date de dépôt: 22.02.2021
(51) Int. Cl.: G04B 47/06, G01C 17/08

(54) **SYSTÈME FLUIDIQUE ANNULAIRE AVEC FONCTION BOUSSOLE**
RINGFÖRMIGES FLUIDIKSYSTEM MIT KOMPASSFUNKTION
ANNULAR FLUID SYSTEM WITH COMPASS FUNCTION

(30) Priorité: 09.09.2020 CH 11292020
(43) Date de publication de la demande: 16.03.2022
(60) Demande divisionnaire: 22162918.1
(73) Titulaire: The Swatch Group Research and Development Ltd, 2074 Marin (CH)
(72) Inventeur: GUEISSAZ, François, 2036 Cormondrèche (CH); WILLEMIN, Michel, 2515 Prêles (CH); IMBODEN, Matthias, 2072 St-Blaise (CH)
(74) Mandataire: ICB SA

(56) Documents cités:
- JP-U- S57 170 011
- JP-U- S59 175 191
- US-B1- 6 430 825

## Description

### Domaine technique de l'invention

L'invention concerne un objet portable tel qu'une montre bracelet munie de fonctions accessoires typiquement d'une fonction de boussole magnétique, et d'une fonction de baromètre ou de thermomètre ainsi éventuellement que d'une fonction d'indication de niveau

### Arrière-plan technologique

On connaît déjà des boussoles de navigation en forme de sphère dans un globe rempli de liquide. On connaît également des baromètres utilisant des soufflets fermés changeant de volume en fonction de la pression ambiante ainsi que des thermomètres utilisant la dilation thermique de liquides. Certains de ces dispositifs ont été intégrés dans des montres bracelet.

On comprend toutefois que ces dispositifs présentent un encombrement important dans la boîte de montre au niveau du cadran et nécessitent par là même d'importantes modifications de l'esthétique habituelle des montres de bracelet, ce qui peut nuire à leur attractivité. Le document JP S57 170011 U montre toutes les caractéristiques du préambule de la revendication 1 annexée.

### Résumé de l'invention

L'invention a pour but d'offrir, dans un objet porté tel une montre au poignet, les fonctions de boussole magnétique et optionnellement de baromètre ou de thermomètre, dans un système magnétique-fluidique sans l'aide d'un système électronique, et sans besoin d'alimentation énergétique auxiliaire, en laissant un espace central vide tel que pour recevoir un mouvement horloger.

A cet effet, l'invention concerne un dispositif qui propose une configuration annulaire, comparable à une lunette de montre, qui ne fixe pas de contraintes dans sa portion centrale, hormis l'absence de matériaux ferromagnétiques ou magnétiquement polarisés, pour y héberger par exemple un mouvement horloger. La fonction principale visée par cette invention est de constituer une boussole magnétique.

Le dispositif porte sur la réalisation d'une structure annulaire flottant en équilibre gravimétrique, avec un coefficient de frottement statique quasi nul, à l'intérieur d'un tube annulaire rempli d'un fluide adéquat, l'ensemble étant appelé système fluidique « ludion » annulaire avec fonction boussole.

Cette structure annulaire mobile comporte au minimum un aimant ou une portion aimantée, polarisée de manière à ce qu'elle subisse un moment de force lorsqu'elle est placée dans le champ magnétique terrestre.

Ce moment de force agit sur la structure et la force à s'aligner dans la direction du vecteur magnétique terrestre. L'alignement s'effectue de manière quasi parfaite, grâce à la faible force de frottement statique, avec une constante de temps qui dépend de la nature du fluide dans lequel la structure mobile baigne, et de divers facteurs tels la masse de la structure mobile, l'amplitude de la force magnétique, l'espace la séparant de la paroi du tube annulaire la contenant, etc.

La quasi absence de forces de frottement statique est fondée, d'une part, sur l'équilibre gravimétrique obtenu par ajustement de la masse volumique de la structure mobile de manière à ce qu'elle soit égale à celle du fluide remplissant le tube annulaire, et, d'autre part, sur les propriétés lubrifiantes de ce fluide.

La constante de temps d'alignement de la structure mobile sur le vecteur magnétique terrestre doit être inférieure à environ 1 seconde afin de permettre 95 % du déplacement angulaire en moins d'environ 3 secondes (dans l'hypothèse de forces visqueuses proportionnelles à la vitesse angulaire) pour une utilisation pratique.

Des fonctions secondaires, telles que barométriques ou thermométriques, sont envisagées dans le cadre de la présente invention. Elles utilisent les propriétés de compressibilité d'un volume fermé de gaz, selon la loi des gaz, ou la dilatation d'un fluide en fonction de la température.

L'invention permet de réaliser une ou plusieurs fonctions utiles, avec une esthétique innovante dans un objet portable tel une montre au poignet, ces fonctions pouvant être notamment intégrées dans la lunette de la montre et donc sans affecter l'esthétique du cadran.

### Brève description des figures

- D'autres caractéristiques et avantages de la présente invention apparaîtront dans la description suivante de modes de réalisation préférés, présentés à titre d'exemple non limitatif en référence aux dessins annexés :
- la figure 1 montre une représentation schématique en plan et en coupe du dispositif fluidique annulaire selon l'invention avec la structure annulaire munie d'aimants flottant dans un tube annulaire pour réaliser une fonction boussole.
- la figue 2 montre l'agencement de ce même dispositif permettant d'indiquer en outre la pression atmosphérique, la structure annulaire n'étant pas représentée.
- la figure 3 montre l'agencement du dispositif de la figure 1 permettant d'indiquer en outre la température, la structure annulaire n'étant pas représentée.
- la figure 4 montre une représentation schématique en plan d'une variante de la structure annulaire du dispositif selon l'invention.
- la figure 5 montre schématiquement le dispositif selon l'invention avec la structure annulaire munie des aimants soumis à un moment de force l'amenant à s'aligner dans la direction du vecteur magnétique externe par rotation.
- la figure 6 montre quatre configurations différentes de répartition du ou des aimants sur la structure annulaire du dispositif selon l'invention.
- la figure 7 montre une représentation schématique en plan de la structure annulaire et du tube annulaire avec un dégagement pour un niveau à bulles.
- la figure 8A montre schématiquement avec une demi vue en coupe les différents positionnements possibles du dispositif fluidique annulaire selon l'invention au sein d'une boîte de montre.
- la figure 8B montre ces mêmes positionnements dans une vue en plan de la boîte de montre.
- la figure 9 montre une vue en plan d'une boîte de montre munie du dispositif annulaire selon l'invention disposé dans la lunette.

### Description détaillée de l'invention

La présente invention se rapporte à un dispositif fluidique annulaire assurant la fonction de boussole et de thermomètre ou de baromètre, ainsi eventuellement que la fonction d'indication de niveau

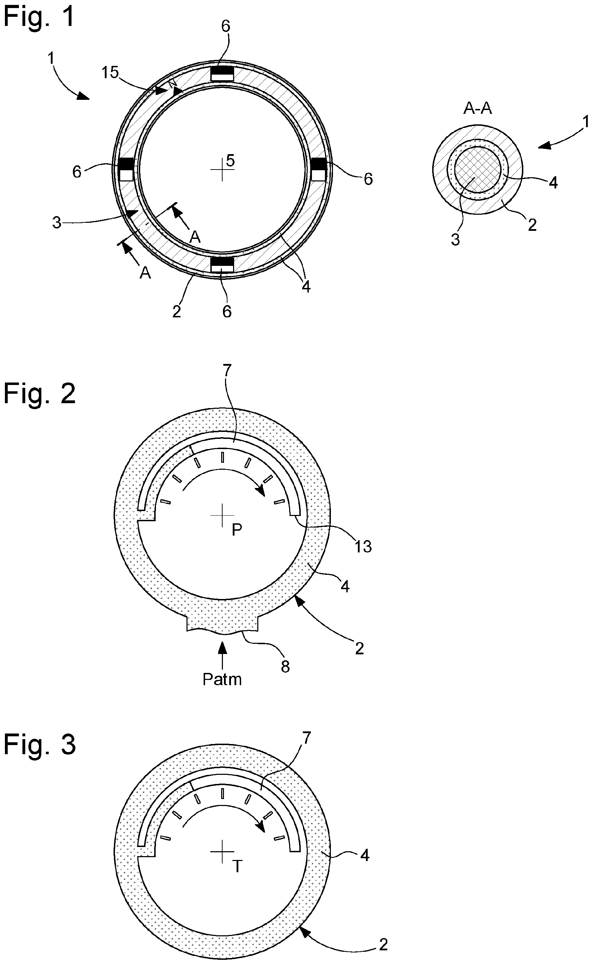

Selon un mode de réalisation non revendiqué représenté à la figure 1, le dispositif incorpore la seule fonction de boussole magnétique.

Le dispositif 1 comprend un tube 2 annulaire fermé à ses extrémités, la paroi du tube étant de section circulaire, carrée, ou autre. Ce tube 2 représente l'enveloppe extérieure du dispositif, qui est intégré par exemple dans une boîte de montre. La paroi de ce tube est transparente au moins sur une portion qui est destinée à être visible depuis l'extérieur après intégration dans la boîte de montre ou autre objet. L'épaisseur de la paroi peut varier dans sa partie visible, afin de produire un effet optique avantageux pour la visualisation du ou des points cardinaux 15 indiqués par le système flottant 3 à l'intérieur de ce tube comme décrit ci-après. La paroi intérieure du tube peut également être recouverte d'une fine couche fonctionnelle telle qu'une couche de polymères perfluorés, par exemple du PTFE (polytétrafluoroéthylène), ou autre comme du parylène, etc. diminuant les forces de frottement.

Un système flottant 3, par exemple sous la forme d'un tore rigide, est placé à l'intérieur de ce tube 2. Il baigne dans un fluide 4 adéquat remplissant l'espace vide. Le système flottant 3 est monté libre en rotation autour de l'axe central 5 du tube 2 et par rapport audit tube annulaire 2 qui est solidaire de l'objet au sein duquel il est disposé.

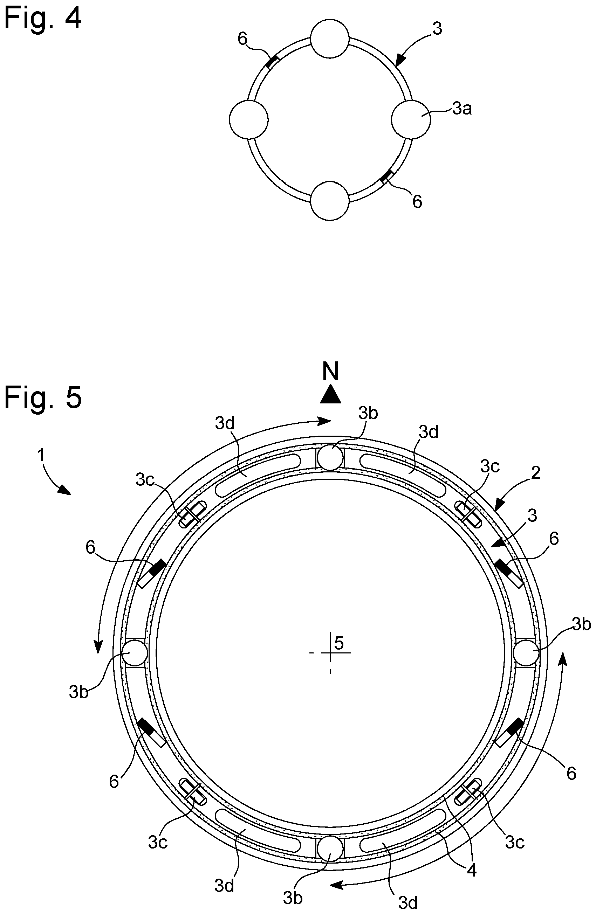

Ce système flottant peut être constitué d'un seul volume solide annulaire ou de plusieurs éléments reliés par un anneau. La section de ce volume solide ou des éléments reliés par un anneau est inférieure à la section intérieure du tube annulaire les contenant. Diverses géométries de section peuvent être envisagées, d'une part afin de réduire les effets de frottement avec la paroi intérieure du tube annulaire, et d'autre part dans le but de répondre aux critères esthétiques de l'application visée. D'autre modes de réalisation sont possibles où un anneau plus fin relie plusieurs éléments de guidage au sein du tube annulaire. Dans l'exemple de la figure 4, les éléments reliés par un anneau sont des sphères 3a.

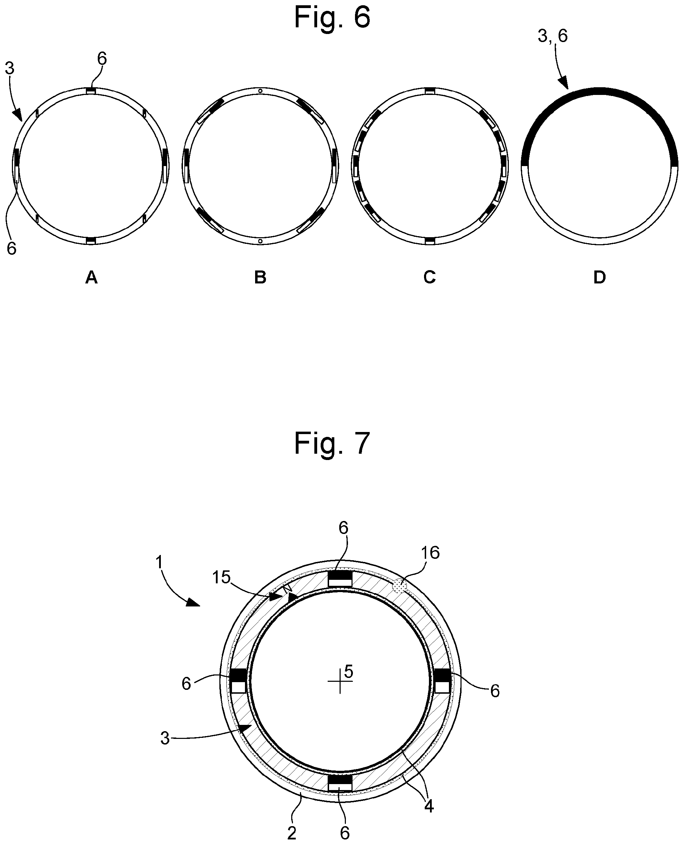

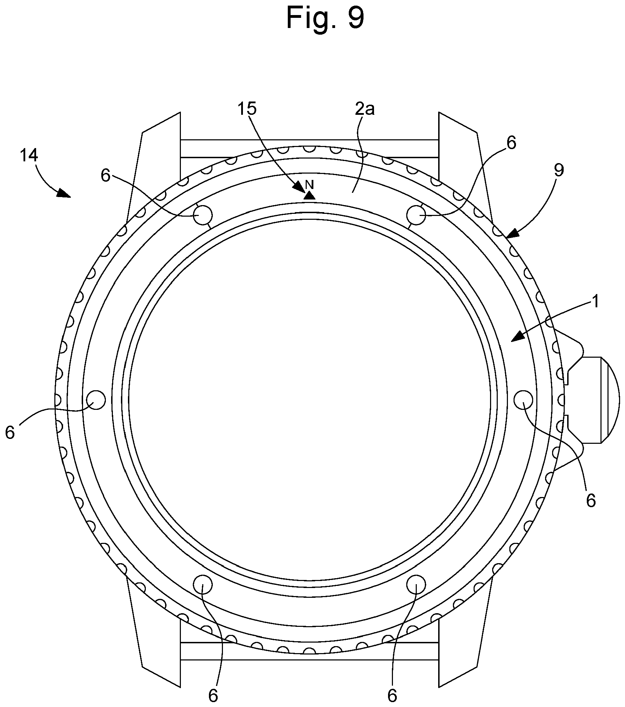

Le système flottant 3 à l'intérieur du tube annulaire 2 comprend un ou plusieurs éléments magnétiques permanents 6 solidaires du système flottant 3. Ils sont au nombre de deux dans l'exemple de la figure 4, de quatre dans l'exemple de la figure 1, de six dans l'exemple de la figure 9, de huit à la figure 6A et de douze à la figure 6C. En variante représentée à la figure 6D, le système flottant 3 peut être formé d'un anneau entièrement magnétisé (élément magnétique 6) avec, par exemple, l'anneau recouvert d'une couche mince magnétique. Les aimants peuvent être alignés dans une même direction comme schématisé aux figures 1, 6A ou dans des directions différentes comme schématisé aux figures 5, 6B et 6C. Le ou les aimants 6 permettent au système flottant 3 de subir un moment de force l'amenant à s'aligner dans la direction du vecteur magnétique externe, c.à.d. du champ magnétique terrestre, comme schématisé à la figure 5. Ces aimants sont, par exemple, surmoulés par la matière du système flottant. Il peut, à titre d'exemple, s'agir d'aimants réalisés dans un alliage de samarium et de cobalt. Préférentiellement, ces aimants sont répartis de manière axisymétrique sur la circonférence du système flottant. Pour la configuration de la figure 4 avec un anneau reliant des éléments tels que des sphères, les aimants peuvent être disposés dans les sphères, sur l'anneau ou être l'anneau en tant que tel. Selon une variante non représentée, des particules polarisables peuvent être intégrées à la matière du système flottant puis magnétisées. Avantageusement, le système flottant est réalisé en matériau plastique, typiquement de l'ABS (acrylonitrile butadiène styrène).

Pour ajuster la masse volumique du tore, ou plus généralement du système flottant, et qu'il flotte dans le fluide, le tore peut comprendre en outre une ou plusieurs cavités remplies d'air 3d, afin d'ajuster l'équilibre gravimétrique dans le fluide 4 l'entourant (fig.5).

De préférence, la surface extérieure du système flottant est recouverte d'une fine couche fonctionnelle telle qu'une couche de polymères perfluorés, par exemple PTFE, ou autre comme du parylène, etc. diminuant les forces de frottement.

Comme montré à la figure 5, le système flottant 3 peut également être muni de roues 3b, dites horizontales, libres de tourner autour d'un axe parallèle à l'axe central 5 et/ou de roues 3c, dites verticales, libres de tourner autour d'un axe perpendiculaire à l'axe central 5. Ces roues horizontales et verticales sont montées avec un jeu par rapport aux parois du tube annulaire 2 et ont pour objet de réduire le frottement dans les directions parallèle et perpendiculaire à l'axe central 5.

Le système flottant peut être muni d'un décor correspondant à l'esthétique choisie pour l'application visée.

Dans un mode de réalisation préféré, ce décor comprend des portions phosphorescentes ou fluorescentes. Comme susmentionné, le système flottant est également marqué avec au moins un point cardinal référencé 15 dans les figures.

Un fluide adéquat sera choisi pour remplir l'espace vide entre la paroi intérieure du tube annulaire et le système flottant. Les caractéristiques principales du fluide sont la transparence, la faible viscosité et une masse volumique adéquate qui est sensiblement égale à celle du système flottant. La viscosité dynamique est typiquement comprise entre 0.3 et 10 mPa s.

Ce fluide peut être composé de chaînes d'hydrocarbures H-C-O (solvant organique) ou d'une huile silicone, sur lesquelles d'autres radicaux fonctionnels peuvent être greffés.

Les forces de frottement statiques doivent produire un moment de frottement statique largement plus faible que le moment magnétique appliqué par l'interaction du système flottant avec le champ magnétique terrestre, afin de donner une indication précise du nord magnétique.

Finalement, les forces de frottement dynamiques doivent être suffisamment faibles pour permettre un positionnement rapide du système flottant, avec une constante de temps inférieure ou égale à typiquement 1 seconde.

Selon un premier mode de réalisation représenté à la figure 2, le dispositif de l'invention incorpore la fonction boussole ainsi que la fonction baromètre.

Un deuxième tube capillaire 7 est greffé sur le tube annulaire 2 décrit en lien avec le premier mode de réalisation. Ce tube capillaire de faible section interne, avec typiquement un diamètre interne de 50 et 500 µm, est en communication fluidique avec le tube annulaire. Sa géométrie extérieure est calculée afin de rendre visible une ligne de couleur déposée sur sa face arrière, sur la portion remplie par le fluide transparent issu du tube annulaire décrit ci-dessus, par un effet optique produisant un fort contraste.

Un volume d'expansion 13, rempli d'un gaz ou d'un mélange de gaz compressible, par exemple de l'air, est placé à l'extrémité libre du tube capillaire 7, et une membrane 8 est placée sur le tube annulaire 2 afin de transmettre la pression atmosphérique sur le fluide 4. De cette manière, le fluide peut se déplacer à l'intérieur du capillaire en fonction de la pression atmosphérique et en donner une indication.

Selon un deuxième mode de réalisation représenté à la figure 3, le dispositif de l'invention incorpore la fonction boussole ainsi que la fonction thermomètre.

Le dispositif reprend les ajouts décrits en lien avec le deuxième mode de réalisation, à l'exception de la membrane qui est supprimée, afin de permettre à la dilatation thermique du fluide de produire son déplacement dans le capillaire d'affichage décrit en lien avec le deuxième mode réalisation, donnant ainsi une indication de température en lieu et place de la pression atmosphérique.

De façon avantageuse, le dispositif de l'invention incorpore en outre la fonction d'indication de niveau, type niveau à bulle, pour une utilisation améliorée de la fonction de boussole magnétique. Cette fonction d'indication de niveau peut être présente en plus de la fonction de thermomètre ou de baromètre.

Le système flottant 3 à l'intérieur du tube annulaire 2 décrit en lien avec le premier mode de réalisation comprendra un dégagement 16 dans sa partie destinée à être visible et communiquant avec le fluide, afin de permettre le passage d'une ou plusieurs bulles d'air, dans le but de donner une indication de niveau ou, en d'autres mots, de l'assiette du dispositif selon l'invention porté par l'utilisateur (fig.7). Un dégagement 16 pourra également avantageusement être pratiqué dans la partie supérieure du tube annulaire 2, de manière à offrir un passage de section circulaire dans le fluide. De manière alternative, seul le tube annulaire 2 peut être pourvu du dégagement 16.

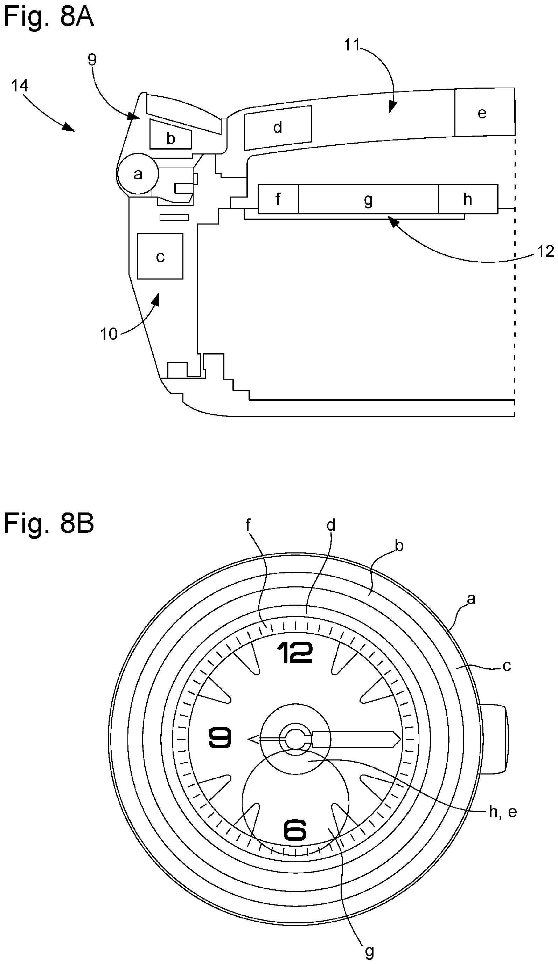

Pour une application horlogère, le dispositif selon l'invention peut être positionné à plusieurs endroits au sein de la boîte de montre. Les figures 8A et 8B illustrent schématiquement les différentes positions que le dispositif peut occuper au sein de la boîte de montre. A titre non exhaustif, il peut être positionné au niveau de la lunette 9 pour les positions a et b, de la carrure 10 pour la position c, de la glace 11 pour les positions d et e et du cadran 12 pour les positions f, g et h.

Comme précédemment mentionné, seule une partie de la paroi du tube annulaire peut être transparente et permettre de visualiser le système flottant depuis l'extérieur de la boîte de montre. Un tel exemple est représenté à la figure 9 où le système flottant disposé au niveau de la lunette 9 est seulement visible à travers la portion transparente 2a de la paroi qui est à 12h sur la boîte de montre 14. Dans ce cas, le marquage du système flottant doit être suffisant pour qu'au moins un point cardinal 15 soit visible à travers la paroi transparente quelle que soit la position angulaire du système flottant.

### Légende

- (1): Dispositif fluidique annulaire
- (2): Tube annulaire, aussi dit tube principal,
a. Portion de paroi transparente
- (3): Système flottant, structure flottante ou tore
a. Sphère
b. Roue horizontale
c. Roue verticale
d. Evidement ou cavité
- (4): Fluide
- (5): Axe central du tube
- (6): Elément magnétique
- (7): Tube capillaire, aussi dit tube secondaire,
- (8): Membrane
- (9): Lunette
- (10): Carrure
- (11): Glace
- (12): Cadran
- (13): Volume d'expansion
- (14): Boîte de montre
- (15): Point cardinal
- (16): Dégagement

## Revendications

1. Dispositif fluidique annulaire (1) portable comprenant :
- un tube annulaire (2) délimitant un volume intérieur fermé,
- un fluide (4) disposé dans le volume intérieur fermé,
- un système flottant (3) disposé dans le volume intérieur fermé et baignant dans le fluide (4), ledit système flottant (3) étant agencé pour tourner librement autour d'un axe central (5) du tube annulaire (2) et par rapport audit tube annulaire (2), et ledit système flottant (3) présentant un marquage avec au moins un des quatre points cardinaux (15),
- au moins un élément magnétique polarisé de manière permanente (6) solidaire du système flottant (3) permettant audit système flottant (3) de subir un moment de force l'amenant à s'aligner dans la direction du vecteur magnétique externe par rotation autour dudit axe central (5),
ledit tube annulaire (2) étant transparent sur au moins une portion de sa paroi (2a) de manière à visualiser le marquage du système flottant (3) depuis l'extérieur du tube annulaire (2), **caractérisé en ce qu'**il comporte un tube capillaire (7) en communication fluidique avec le tube annulaire (2) pour ajouter une fonction soit de baromètre, soit de thermomètre au dispositif (1).

2. Dispositif (1) selon la revendication 1, **caractérisé en ce que** le système flottant (3) est un tore.

3. Dispositif (1) selon la revendication 1, **caractérisé en ce que** le système flottant (3) est un anneau reliant plusieurs parties.

4. Dispositif (1) selon la revendication précédente, **caractérisé en ce que** les parties sont des sphères (3a).

5. Dispositif (1) selon l'une des revendications précédentes, **caractérisé en ce que** ledit au moins élément magnétique polarisé de manière permanente (6) est un aimant surmoulé par la matière du système flottant (3).

6. Dispositif (1) selon l'une des revendications précédentes, **caractérisé en ce que** le dispositif comporte plusieurs éléments magnétiques polarisés de manière permanente (6) répartis de manière axisymétrique sur la circonférence du système flottant (3).

7. Dispositif (1) selon l'une des revendications 1 à 4, **caractérisé en ce que** ledit au moins élément magnétique polarisé de manière permanente (6) est formé de particules réparties au sein de la matière du système flottant (3).

8. Dispositif (1) selon l'une des revendications 1 à 4, **caractérisé en ce qu'**il comporte un seul élément magnétique polarisé de manière permanente (6) constitué d'une couche magnétique recouvrant le système flottant (3).

9. Dispositif (1) selon l'une des revendications précédentes, **caractérisé en ce que** la masse volumique du fluide (4) est sensiblement égale à la masse volumique du système flottant (3).

10. Dispositif (1) selon l'une des revendications précédentes, **caractérisé en ce que** le fluide (4) est composé de chaînes d'hydrocarbures H-C-O ou d'une huile silicone.

11. Dispositif (1) selon l'une des revendications précédentes, **caractérisé en ce que** le fluide (4) a une viscosité comprise entre 0.3 et 10 mPa s.

12. Dispositif (1) selon la revendication précédente, **caractérisé en ce qu'**il comporte une membrane (8) placée sur le tube annulaire (2) afin de transmettre la pression atmosphérique sur le fluide (4) pour la fonction de baromètre.

13. Dispositif (1) selon l'une des revendications précédentes, **caractérisé en ce que** le système flottant (3) et/ou le tube annulaire (2) comprennent un dégagement (16) communiquant avec le fluide (4), ledit dégagement (16) emprisonnant dans son volume intérieur une ou plusieurs bulles d'air dans le but de donner une indication de niveau, et **en ce que** lorsque le système flottant (3) et le tube annulaire (2) comportent chacun un dégagement (16), les deux dégagements (16) respectifs sont en vis-à-vis.

14. Dispositif (1) selon l'une des revendications précédentes, **caractérisé en ce que** le système flottant (3) est muni de roues (3b), dites horizontales, libres de tourner autour d'un axe parallèle à l'axe central (5) et/ou de roues (3c), dites verticales, libres de tourner autour d'un axe perpendiculaire à l'axe central (5), lesdites roues horizontales (3b) et verticales (3c) étant montées avec un jeu par rapport aux parois du tube annulaire (2) et ayant pour objet de réduire le frottement dans les directions parallèle et perpendiculaire à l'axe central (5).

15. Objet portable comprenant le dispositif (1) selon l'une des revendications précédentes.

16. Objet portable selon la revendication précédente, **caractérisé en ce qu'**il s'agit d'une boîte de montre (14).

17. Objet portable selon la revendication précédente, **caractérisé en ce que** le dispositif (1) est positionné sur une lunette (9), une carrure (10), un cadran (12) ou une glace (11) de la boîte de montre (14).

18. Objet portable selon la revendication précédente, **caractérisé en ce que** le dispositif (1) est positionné sur la lunette (9) avec le système flottant (3) visible à travers une portion de la paroi (2a) transparente du tube annulaire (2).

## Patentansprüche

1. Tragbare ringförmige Fluidik-Vorrichtung (1), umfassend:
- ein ringförmiges Rohr (2), das ein geschlossenes Innenvolumen begrenzt,
- ein Fluid (4), das in dem geschlossenen Innenvolumen angeordnet ist,
- ein schwimmend gelagertes System (3), das in dem geschlossenen Innenvolumen angeordnet ist, und in dem Fluid (4) schwimmt, wobei das schwimmend gelagerte System (3) angeordnet ist, um sich frei um eine zentrale Achse (5) des ringförmigen Rohrs (2) und in Bezug zum ringförmigen Rohr (2) zu drehen, und wobei das schwimmend gelagerte System (3) eine Markierung mit mindestens einer der vier Himmelsrichtungen (15) aufweist,
- mindestens ein permanent polarisiertes magnetisches Element (6), das fest mit dem schwimmend gelagerten System (3) verbunden ist, und es dem schwimmend gelagerten System (3) ermöglicht, ein Kraftmoment zu erfahren, das es dazu bringt, sich durch Drehung um die zentrale Achse (5) in Richtung des äußeren magnetischen Vektors auszurichten,
wobei das ringförmige Rohr (2) zumindest auf einem Abschnitt seiner Wand (2a) transparent ist, um die Markierung des schwimmend gelagerten Systems (3) von außerhalb des ringförmigen Rohrs (2) sichtbar zu machen, **dadurch gekennzeichnet, dass** es ein Kapillarrohr (7) in Fluidverbindung mit dem ringförmigen Rohr (2) beinhaltet, um zur Vorrichtung (1) eine Funktion entweder eines Barometers oder eines Thermometers hinzuzufügen.

2. Vorrichtung (1) nach Anspruch 1, **dadurch gekennzeichnet, dass** das schwimmend gelagerte System (3) ein Torus ist.

3. Vorrichtung (1) nach Anspruch 1, **dadurch gekennzeichnet, dass** das schwimmend gelagerte System (3) ein mehrere Teile verbindender Ring ist.

4. Vorrichtung (1) nach dem vorstehenden Anspruch, **dadurch gekennzeichnet, dass** die Teile Kugeln (3a) sind.

5. Vorrichtung (1) nach einem der vorstehenden Ansprüche, **dadurch gekennzeichnet, dass** das mindestens eine permanent polarisierte magnetische Element (6) ein Magnet ist, der mit dem Werkstoff des schwimmend gelagerten Systems (3) überformt ist.

6. Vorrichtung (1) nach einem der vorstehenden Ansprüche, **dadurch gekennzeichnet, dass** die Vorrichtung mehrere permanent polarisierte magnetische Elemente (6) beinhaltet, die achsensymmetrisch über den Umfang des schwimmend gelagerten Systems (3) verteilt sind.

7. Vorrichtung (1) nach einem der Ansprüche 1 bis 4, **dadurch gekennzeichnet, dass** das mindestens eine permanent polarisierte magnetische Element (6) aus im Werkstoff des schwimmend gelagerten Systems (3) verteilten Partikeln gebildet ist.

8. Vorrichtung (1) nach einem der Ansprüche 1 bis 4, **dadurch gekennzeichnet, dass** sie ein einziges permanent polarisiertes magnetisches Element (6) beinhaltet, das aus einer magnetischen Schicht besteht, die das schwimmend gelagerte System (3) bedeckt.

9. Vorrichtung (1) nach einem der vorstehenden Ansprüche, **dadurch gekennzeichnet, dass** die Rohdichte des Fluids (4) im Wesentlichen gleich der Rohdichte des schwimmend gelagerten Systems (3) ist.

10. Vorrichtung (1) nach einem der vorstehenden Ansprüche, **dadurch gekennzeichnet, dass** sich das Fluid (4) aus H-C-O-Kohlenwasserstoffketten oder aus Silikonöl zusammensetzt.

11. Vorrichtung (1) nach einem der vorstehenden Ansprüche, **dadurch gekennzeichnet, dass** das Fluid (4) eine Viskosität aufweist, die zwischen 0,3 und 10 mPa s liegt.

12. Vorrichtung (1) nach dem vorstehenden Anspruch, **dadurch gekennzeichnet, dass** sie eine Membran (8) beinhaltet, die auf dem ringförmigen Rohr (2) platziert ist, um den atmosphärischen Druck auf das Fluid (4) für die Barometerfunktion zu übertragen.

13. Vorrichtung (1) nach einem der vorstehenden Ansprüche, **dadurch gekennzeichnet, dass** das schwimmend gelagerte System (3) und/oder das ringförmige Rohr (2) einen mit dem Fluid (4) in Verbindung stehenden Freiraum (16) aufweisen, wobei der Freiraum (16) in seinem Innenvolumen eine oder mehrere Luftblasen mit dem Ziel einschließt, eine Füllstandsanzeige abzugeben, und dadurch, dass, wenn das schwimmend gelagerte System (3) und das ringförmige Rohr (2) jeweils einen Freiraum (16) aufweisen, die beiden jeweiligen Freiräume (16) einander gegenüberliegen.

14. Vorrichtung (1) nach einem der vorstehenden Ansprüche, **dadurch gekennzeichnet, dass** das schwimmend gelagerte System (3) mit sogenannten horizontalen Rädern (3b), die frei sind, um sich um eine Achse parallel zur zentralen Achse (5) zu drehen, und/oder sogenannten vertikalen Rädern (3c), versehen ist, die frei sind, um sich um eine Achse senkrecht zur zentralen Achse (5) zu drehen, wobei die horizontalen (3b) und vertikalen (3c) Räder mit einem Spiel in Bezug auf die Wände des ringförmigen Rohrs (2) angebracht sind und den Zweck verfolgen, die Reibung in den Richtungen parallel und senkrecht zur zentralen Achse (5) zu verringern.

15. Tragbarer Gegenstand, umfassend die Vorrichtung (1) nach einem der vorstehenden Ansprüche.

16. Tragbarer Gegenstand nach dem vorstehenden Anspruch, **dadurch gekennzeichnet, dass** er ein Uhrgehäuse (14) ist.

17. Tragbarer Gegenstand nach dem vorstehenden Anspruch, **dadurch gekennzeichnet, dass** die Vorrichtung (1) auf einer Lünette (9), einem Mittelteil (10), einem Zifferblatt (12) oder einem Glas (11) des Uhrgehäuses (14) positioniert ist.

18. Tragbarer Gegenstand nach dem vorstehenden Anspruch, **dadurch gekennzeichnet, dass** die Vorrichtung (1) auf der Lünette (9) positioniert ist, wobei das schwimmend gelagerte System (3) durch einen Abschnitt der transparenten Wand (2a) des ringförmigen Rohrs (2) sichtbar ist.

## Claims

1. An annular fluidic device (1) wearable comprising:
- an annular tube (2) delimiting a closed internal volume,
- a fluid (4) disposed in the closed internal volume,
- a floating system (3) disposed in the closed internal volume and bathed in the fluid (4), said floating system (3) being arranged to rotate freely around a central axis (5) of the annular tube (2) and relative to said annular tube (2), and said floating system (3) having a marking with at least one of the four cardinal points (15),
- at least one permanently polarised magnetic element (6) integral with the floating system (3) allowing said floating system (3) to undergo a moment of force causing it to be aligned in the direction of the external magnetic vector by rotating around of said central axis (5),
said annular tube (2) being transparent at least on a portion of its wall (2a) so as to visualise the marking of the floating system (3) from the outside of the annular tube (2), **characterised in that** it includes a capillary tube (7) in fluid communication with the annular tube (2) to add a function either of barometer or of thermometer to the device (1).

2. The device (1) according to claim 1, **characterised in that** the floating system (3) is a torus.

3. The device (1) according to claim 1, **characterised in that** the floating system (3) is a ring connecting several parts.

4. The device (1) according to the preceding claim, **characterised in that** the parts are spheres (3a).

5. The device (1) according to one of the preceding claims, **characterised in that** said at least one permanently polarised magnetic element (6) is a magnet overmoulded by the material of the floating system (3).

6. The device (1) according to one of the preceding claims, **characterised in that** the device includes several permanently polarised magnetic elements (6) distributed in an axisymmetric manner over the circumference of the floating system (3).

7. The device (1) according to one of claims 1 to 4, **characterised in that** said at least one permanently polarised magnetic element (6) is formed of particles distributed within the material of the floating system (3).

8. The device (1) according to one of claims 1 to 4, **characterised in that** it includes a single permanently polarised magnetic element (6) consisting of a magnetic layer covering the floating system (3).

9. The device (1) according to one of the preceding claims, **characterised in that** the density of the fluid (4) is substantially equal to the density of the floating system (3).

10. The device (1) according to one of the preceding claims, **characterised in that** the fluid (4) is composed of H-C-O hydrocarbon chains or of silicone oil.

11. The device (1) according to one of the preceding claims, **characterised in that** the fluid (4) has a viscosity comprised between 0.3 and 10 mPa s.

12. The device (1) according to the preceding claim, **characterised in that** it includes a membrane (8) placed on the annular tube (2) in order to transmit the atmospheric pressure on the fluid (4) for the barometer function.

13. The device (1) according to one of the preceding claims, **characterised in that** the floating system (3) and/or the annular tube (2) comprise a clearance (16) communicating with the fluid (4), said clearance (16) trapping in its internal volume one or more air bubbles in order to give a level indication, and **in that** when the floating system (3) and the annular tube (2) each include a clearance (16), the two respective clearances (16) are opposite.

14. The device (1) according to one of the preceding claims, **characterised in that** the floating system (3) is provided with wheels (3b), called horizontal wheels, which are free to rotate about an axis parallel to the central axis (5) and/or wheels (3c), called vertical wheels, which are free to rotate about an axis perpendicular to the central axis (5), said horizontal (3b) and vertical (3c) wheels being mounted with a clearance relative to the walls of the annular tube (2) and are intended to reduce the friction in the directions parallel and perpendicular to the central axis (5).

15. A wearable object comprising the device (1) according to one of the preceding claims.

16. The wearable object according to the preceding claim, **characterised in that** it is a watch case (14).

17. The wearable object according to the preceding claim, **characterised in that** the device (1) is positioned on a bezel (9), a middle part (10), a dial (12) or a crystal (11) of the watch case (14).

18. The wearable object according to the preceding claim, **characterised in that** the device (1) is positioned on the bezel (9) with the floating system (3) visible through a portion of the transparent wall (2a) of the annular tube (2).
